# EUROPÄISCHE PATENTSCHRIFT

(11) **EP 0 879 741 B1**
(45) Veröffentlichungstag und Bekanntmachung des Hinweises auf die Patenterteilung: **16.01.2002**
(21) Anmeldenummer: 98108433.8
(22) Anmeldetag: 08.05.1998
(51) Int. Cl.: B60R 22/46

(54) **Gurtstraffer für ein Fahrzeuginsassen-Rückhaltesystem**
Belt tightener for a vehicle occupant restraint system
Prétensionneur de sangle pour un système de retenue d'un occupant de véhicule

(30) Priorität: 20.05.1997 DE 29708880 U
(43) Veröffentlichungstag der Anmeldung: 25.11.1998
(73) Patentinhaber: TRW Occupant Restraint Systems GmbH & Co. KG, 73551 Alfdorf (DE)
(72) Erfinder: Betz, Hans-Peter, 73560 Böbingen (DE); Rupp, Raimund, 73553 Alfdorf (DE)
(74) Vertreter: Kitzhofer, Thomas, Dipl.-Ing.

(56) Entgegenhaltungen:
- EP-A- 0 093 237
- EP-A- 0 186 880
- EP-A- 0 558 963
- DE-A- 3 407 379
- DE-U- 29 609 054

## Beschreibung

Die Erfindung betrifft einen Gurtstraffer, insbesondere Schloßstraffer für ein Fahrzeuginsassen-Rückhaltesystem, mit den Merkmalen des Oberbegriffs des Anspruchs 1.

Im Rückhaltefall strömt vom Gasgenerator freiwerdendes, heißes Druckgas in den Arbeitsraum, um das Kolbenteil zu verschieben. Das Zugübertragungsmittel, normalerweise ein Zugseil wird dabei durch unmittelbaren Kontakt mit dem heißen Druckgas hohen Temperaturen ausgesetzt und kann dadurch beschädigt werden. Bei Schloßstraffern kommt zur Temperaturbelastung auch noch eine hohe Zugbelastung des Zugübertragungsmittels hinzu, die durch den sich nach vorn verlagernden Fahrzeuginsassen ausgeübt wird. Das Zugübertragungsmittel wird bislang überdimensioniert, um den Belastungen standhalten zu können, was jedoch die Herstellungskosten des Gurtstraffers sowie sein Gewicht negativ beeinflußt.

In der DE 34 07 379 A1 ist ein an einer Gurtspule angreifender, gattungsgemäßer Gurtstraffer mit einer linearen Kolben-Zylinder-Vorrichtung offenbart. Ein in einem Arbeitsraum des Zylinders beweglicher Kolben ist mit einem Zugseil verbunden, das wiederum in kraftübertragender Verbindung mit der Gurtspule steht. Ein am Kolben angeformter, sich im Arbeitsraum erstreckender Hülsenfortsatz umgibt das Zugseil und schützt dieses in der Anfangsphase der Kolbenbewegung vor dem Kontakt mit heißem Gas. Die Hülse endet an einer Gehäuseöffnung, durch die das Zugseil verläuft.

Die Erfindung schafft einen Gurtstraffer, bei dem das Zugübertragungsmittel geringeren thermischen Belastungen unterworfen ist als bei bekannten Gurtstraffern. Dies wird bei einem Gurtstraffer der eingangs genannten Art durch die im kennzeichnenden Teil des Anspruchs 1 genannten Merkmale erreicht.

Der erfindungsgemäße Gurtstraffer hat gegenüber bislang bekannten unter anderem folgende Vorteile:
Aufgrund der besseren Dichtwirkung kann die Strafferleistung verbessert werden und die Strafferleistung in engen vorbestimmbaren Grenzen gehalten werden.
Die Montage wird vereinfacht und verbilligt, da keine separaten Dichtungen vorgesehen sind.
Die Bruchlast des Zugübertragungsmittels wird verbessert, da das Zugseil keinen hohen Temperaturen mehr ausgesetzt ist.

Vorzugsweise ist das Zugübertragungsmittel ein Zugseil. Bei Verwendung eines Zugseils besteht das Problem, daß dieses zu der in der Stirnwand des Gehäuses vorgesehenen Öffnung, durch das es sich erstreckt, schwer abgedichtet werden kann. Dies ist in der nicht kreiszylindrischen Außenoberfläche des Zugseils begründet. Bei Verwendung einer Ummantelung kann die Außenkontur exakt der Kontur der Öffnung angepaßt sein, so daß die Ummantelung eine Doppelfunktion hat, indem es auch der besseren Abdichtung des Arbeitsraums dient. Die bislang vorgesehenen aufwendigen Dichtungen können damit großteils entfallen, wodurch der Gurtstraffer billiger wird.

Die Hülse kann auf das Zugübertragungsmittel aufgepreßt sein oder auch mit dem Kolbenteil verbunden sein.

Zur besseren Abdichtung und zur besseren Führung des Zugübertragungsmittels ist bei einer bevorzugten Ausführungsform eine in den Arbeitsraum ragende Führung vorgesehen, an der die als Gleitfläche ausgebildete Außenfläche der Umhüllung anliegt.

Weitere Vorteile und Merkmale der Erfindung ergeben sich aus der nachfolgenden Beschreibung und aus den nachfolgenden Zeichnungen, auf die Bezug genommen wird.

In den Zeichnungen zeigen:

Figur 1 eine Längsschnittansicht durch den oberen Teil eines erfindungsgemäßen Gurtstraffers gemäß einer ersten Ausführungsform,

Figur 2 eine Längsschnittansicht durch den oberen Teil des erfindungsgemäßen Gurtstraffers gemäß einer zweiten Ausführungsform, und

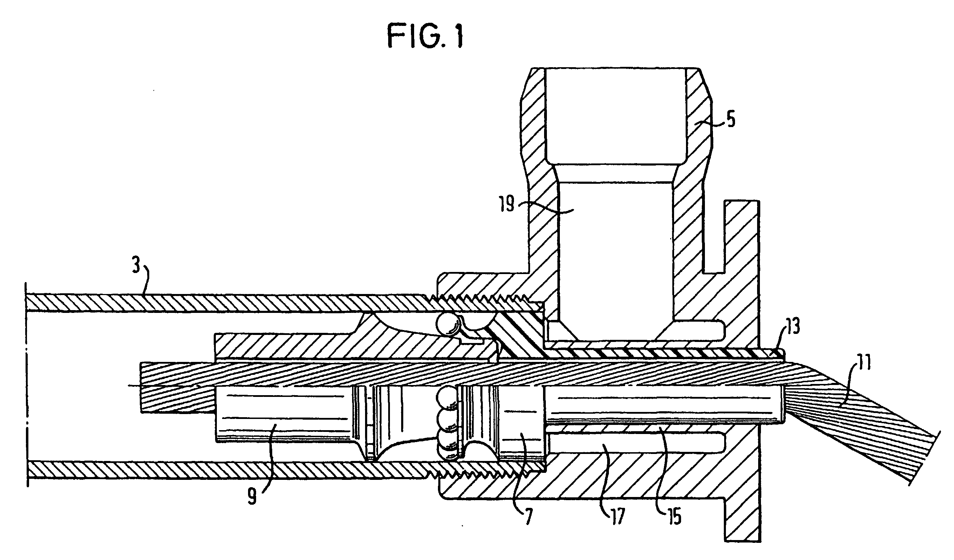

In Figur 1 ist ein Gurtstraffer, genauer gesagt ein Schloßstraffer für ein Fahrzeuginsassen-Rückhaltesystem gezeigt. Der Gurtstraffer hat ein mehrteiliges Gehäuse, von dem in Figur 1 ein Rohr 3 und ein auf das Ende des Rohres aufgeschraubtes Gehäuseteil 5 gezeigt ist. Im Inneren des Rohres 3 ist ein verschiebbar angeordnetes Kolbenteil 7 vorgesehen, das über einen Seilverbinder 9 mit einem Zugübertragungsmittel 11 in Form eines Zugseiles gekoppelt ist. Das Kolbenteil 7 ist aus einem hochtemperaturbeständigen Kunststoff gefertigt, an den einstückig eine Ummantelung des Zugübertragungsmittels 11 in Form einer Hülse 13 angeformt ist. Die Hülse 13 erstreckt sich durch eine ebenfalls hülsenförmige Führung 15, die am Gehäuseteil 5 angeformt ist und in einen Arbeitsraum 17 für einströmendes Druckgas ragt. Der Arbeitsraum 17 hat mehrere Abschnitte, nämlich einen im Inneren des Rohres 3 befindlichen Abschnitt, der vom Kolbenteil 7 beim Aktivieren des Gurtstraffers durchschritten wird, und einen kreisringförmigen Abschnitt im Gehäuseteil 5. In der in Figur 1 dargestellten Ausgangslage grenzt das Kolbenteil 7 unmittelbar an den im Gehäuseteil 5 vorgesehenen Abschnitt des Arbeitsraums 17 an. Eine sich radial zum Arbeitsraum 17 erstreckende Kammer 19 dient der Unterbringung des patronenförmigen Gasgeneratorgehäuses, das in Figur 1 nicht dargestellt ist. Die Kammer 19 mündet in den Arbeitsraum 17.

Im Rückhaltefall strömt das erzeugte Druckgas in den Arbeitsraum 17 und wird von der Führung 15 am unmittelbaren Kontakt mit dem Zugübertragungsmittel 11 gehindert. Das Druckgas verschiebt das Kolbenteil 7 nach links, so daß die Hülse 13 teilweise aus der Führung 15 herausgezogen wird. Die Hülse 13 dient dabei der Abschirmung des Zugübertragungsmittels 11, das den heißen Druckgasen nicht ausgesetzt wird.

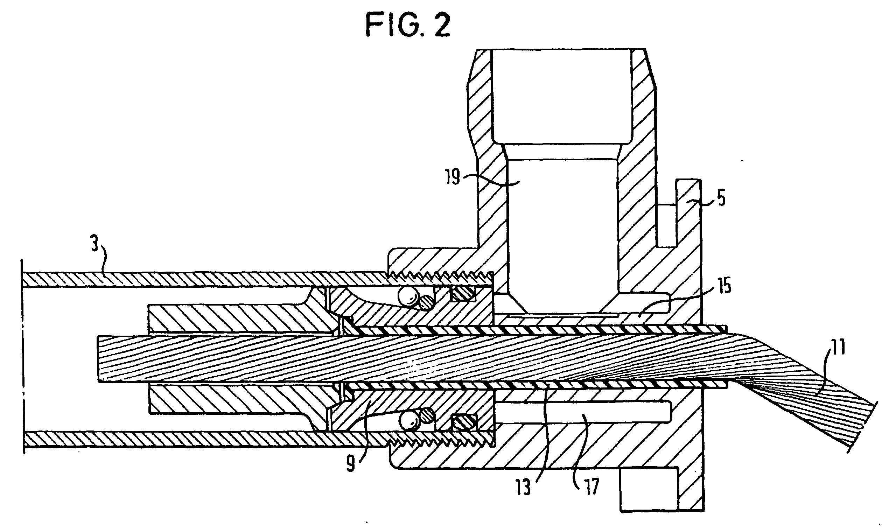

Bei der in Figur 2 dargestellten Ausführungsform ist die Hülse 13 nicht einstückig mit dem Kolbenteil 9 verbunden, sondern als separates Teil ausgebildet, das an seinem rohrseitigen Ende 3 nach außen umgebogen ist und dadurch bei Verschieben des Kolbenteils 9 mitgenommen wird. Die Hülse 13 kann auf das Zugübertragungsmittel 7 aufgepreßt sein, was jedoch nicht zwingend erforderlich ist, und ist aus Kunststoff oder aus Metall.

## Patentansprüche

1. Gurtstraffer, insbesondere Schloßstraffer für ein Fahrzeuginsassen-Rückhaltesystem, mit einem Gehäuse (3, 5), einem Gasgenerator, einem Arbeitsraum (17), in den das im Rückhaltefall freigesetzte Druckgas strömt, einem durch das Druckgas verschiebbaren Kolbenteil (7) im Arbeitsraum (17), einem Gurtangriffsmittel, das mit dem angelegten Gurt in kraflübertragender Beziehung steht, und mit einem durch den Arbeitsraum (17) führenden Zugübertragungsmittel (11), das das Gurtangriffsmittel mit dem Kolbenteil (7) verbindet, wobei sich das Zugübertragungmittel durch eine Öffnung im Gehäuse erstreckt und wobei das Zugübertragungsmittel (11) wenigstens teilweise eine Ummantelung aufweist, die von einer aus einem gegenüber dem heißen Druckgas temperaturbeständigen Material bestehenden Hülse (13) gebildet ist, **dadurch gekennzeichnet, daß** sich die Hülse (13) durch die Öffnung im Gehäuse erstreckt und den Arbeitsraum nach außen abdichtet.

2. Gurtstraffer nach Anspruch 1, **dadurch gekennzeichnet, daß** das Zugübertragungsmittel (11) ein Zugseil ist.

3. Gurtstraffer nach einem der vorhergehenden Ansprüche, **dadurch gekennzeichnet, daß** die Hülse (13) auf das Zugübertragungsmittel (11) aufgepreßt ist.

4. Gurtstraffer nach einem der vorhergehenden Ansprüche, **dadurch gekennzeichnet, daß** die Hülse (13) mit dem Kolbenteil (7) verbunden ist.

5. Gurtstraffer nach einem der vorhergehenden Ansprüche, **dadurch gekennzeichnet, daß** die Hülse aus Kunststoff ist.

6. Gurtstraffer nach einem der vorhergehenden Ansprüche, **dadurch gekennzeichnet, daß** eine in den Arbeitsraum (17) ragende Führung (15) für das Zugübertragungsmittel (11) vorgesehen ist und die Außenfläche der Umhüllung als an der Führung (15) innenseitig anliegende Gleitfläche ausgebildet ist

## Claims

1. A belt tensioner, in particular a buckle tensioner, for a vehicle occupant restraint system, with a housing (3, 5), a gas generator, a working space (17) into which the compressed gas flows which is released in the case of restraint, a piston part (7) displaceable by the compressed gas in the working space (17), a belt engaging means which is in force-transferring relationship with the fastened belt, and with a traction transfer means (11) which leads through the working space (17) and connects the belt engaging means with the piston part (7), the traction transfer means extending through an opening in the housing and the traction transfer means (11) having at least partially a sheathing which is formed by a sleeve (13) consisting of a material having a temperature stability with respect to the hot compressed gas, **characterized in that** the sleeve (13) extends through the opening in the housing and seals the working space with respect to the outside.

2. The belt tensioner according to claim 1, **characterized in that** the traction transfer means (11) is a traction cable.

3. The belt tensioner according to either one of the preceding claims, **characterized in that** the sleeve (13) is pressed onto the traction transfer means (11).

4. The belt tensioner according to any of the preceding claims, **characterized in that** the sleeve (13) is connected with the piston part (7).

5. The belt tensioner according to any of the preceding claims, **characterized in that** the sleeve is made of plastics.

6. The belt tensioner according to any of the preceding claims, **characterized in that** a guide (15) projecting into the working space (17) is provided for the traction transfer means (11) and that the outer surface of the sheathing is designed as a sliding surface in contact with the guide (15) on the inner side.

## Revendications

1. Tendeur de ceinture, en particulier tendeur de serrure pour un système de retenue des occupants d'un véhicule, comprenant un boîtier (3,5), un générateur de gaz, une chambre de travail (17) dans laquelle afflue le gaz sous pression libéré en cas de retenue, une partie de piston (7) déplaçable par le gaz sous pression dans la chambre de travail (17), un moyen d'engagement de ceinture, qui est en liaison de transmission de force avec la ceinture attachée, et un moyen (11) de transmission de traction passant à travers la chambre de travail (17) et reliant le moyen d'engagement de ceinture à la partie de piston (7), le moyen de transmission de traction s'étendant au travers d'une ouverture dans le boîtier et le moyen (11) de transmission de traction présentant au moins partiellement une gaine formée par un manchon (13) en matière thermostable vis-à-vis du gaz chaud sous pression, **caractérisé en ce que** le manchon (13) s'étend au travers de l'ouverture dans le boîtier et étanche la chambre de travail vis-à-vis de l'extérieur.

2. Tendeur de ceinture selon la revendication 1, **caractérisé en ce que** le moyen (11) de transmission de traction est un câble de traction.

3. Tendeur de ceinture selon l'une des revendications précédentes, **caractérisé en ce que** le manchon (13) est emmanché par pression sur le moyen (11) de transmission de traction.

4. Tendeur de ceinture selon l'une des revendications précédentes, **caractérisé en ce que** le manchon (13) est relié à la partie de piston (7).

5. Tendeur de ceinture selon l'une des revendications précédentes, **caractérisé en ce que** le manchon est en matière plastique.

6. Tendeur de ceinture selon l'une des revendications précédentes, **caractérisé en ce qu'**un guide (15) faisant saillie dans la chambre de travail (17) est prévu pour le moyen (11) de transmission de traction, et la surface extérieure de la gaine est réalisée sous forme d'une surface de glissement en contact avec la face intérieure du guide (15).
